Europäisches Patentamt

European Patent Office

Office européen des brevets

(19)

(11) **EP 1 142 311 B1**

(12) **FASCICULE DE BREVET EUROPEEN**

(45) Date de publication et mention
de la délivrance du brevet:
**21.05.2003   Bulletin 2003/21**

(21) Numéro de dépôt: **99961133.8**

(22) Date de dépôt: **21.12.1999**

(51) Int Cl.$^{7}$: **H04N 5/217**, H04N 3/15

(86) Numéro de dépôt international:
**PCT/FR99/03237**

(87) Numéro de publication internationale:
**WO 00/040008 (06.07.2000 Gazette 2000/27)**

(54) **DETECTEUR D'IMAGES A AMPLIFICATEURS INTEGRES POUR ACQUISITION DE DONNEES**

BILDSENSOR MIT INTEGRIERTEN VERSTÄRKERN ZUR DATENERFASSUNG

IMAGE SENSOR WITH INTEGRATED AMPLIFIERS FOR DATA ACQUISITION

(84) Etats contractants désignés:
**DE FR NL**

(30) Priorité:   **23.12.1998   FR 9816357**

(43) Date de publication de la demande:
**10.10.2001   Bulletin 2001/41**

(73) Titulaire: **THALES ELECTRON DEVICES S.A.**
**78140 Vélizy (FR)**

(72) Inventeurs:
• **ROZIERE, Guy, Thomson-CSF P.I.Dépt. Brevets**
**94117 Arcueil Cedex (FR)**

• **MUNIER, Bernard,**
**Thomson-CSF P.I. Dépt.Brevets**
**94117 Arcueil Cedex (FR)**

(74) Mandataire: **Guérin, Michel**
**THALES Intellectual Property,**
**13, Avenue du Président Salvador Allende**
**94117 Arcueil Cédex (FR)**

(56) Documents cités:
**EP-A- 0 818 921          US-A- 5 057 682**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention concerne des détecteurs d'image du type utilisant des matrices de capteurs photosensibles en matériaux semi-conducteurs. L'invention s'applique de manière particulièrement intéressante (mais non exclusivement), dans le cas de la détection d'images radiologiques. Elle pour but de faciliter la fabrication et d'en réduire les coûts, ainsi que d'améliorer la stabilité des mesures et la qualité des images obtenues, dans le cas notamment de détecteurs d'image utilisant un grand nombre de capteurs photosensibles.

Il est courant d'utiliser des matrices de capteurs ou points photosensibles en matériaux semi-conducteurs, dans les techniques d'acquisition d'images. Les points photosensibles sont réalisés sur du matériau semi-conducteur, du silicium par exemple, et ils comprennent très souvent chacun au moins une photodiode. Les photodiodes sont sensibles dans une bande de longueurs d'onde correspondant généralement au rayonnement visible ou proche du visible.

En fonction des applications auxquelles elles sont destinées, les matrices photosensibles peuvent comporter des nombres très variables de pixels c'est à dire de points photosensibles, de quelques uns à plusieurs dizaines de milliers (et pouvant même atteindre plusieurs millions de points photosensibles pour des dimensions de l'ordre par exemple de 50 cm x 50 cm).

L'un des intérêts des images obtenues à l'aide de points photosensibles en matériau semi-conducteur, réside dans le fait que ces images peuvent être numérisées, offrant comme avantages notamment des facilités du traitement et du stockage de l'image. Bien entendu, les avantages liés aux images de type numérique sont tout aussi importants dans le domaine de la détection d'images radiologiques, et particulièrement dans celui de l'imagerie médicale par rayons X.

Pour appliquer à la détection d'images radiologiques des matrices photosensibles telles que ci-dessus décrites, il est bien connu d'interposer un écran en une substance scintillatrice entre le rayonnement X et chacun des points photosensibles de la matrice. La substance scintillatrice est choisie pour convertir le rayonnement X en un rayonnement lumineux, dans la bande de longueurs d'onde à laquelle sont sensibles les points photosensibles.

Suivant l'un des modes de fonctionnement courant, chaque point photosensible comporte un élément faisant fonction d'interrupteur, monté en série avec la photodiode. La commande ligne par ligne de chacun des éléments interrupteurs (commande opérée après une phase d'exposition ou phase d'intégration, au cours de laquelle la photodiode est exposée à un signal lumineux de mesure, c'est à dire à un signal correspondant à une image à détecter), permet de transférer sur une colonne des charges électriques produites par la photodiode correspondante durant la phase d'intégration ;

il est à noter que durant la phase d'intégration, la photodiode est assez fortement polarisée en inverse, de telle manière qu'elle forme une capacité dans laquelle sont stockées les charges engendrées durant cette phase.

Des amplificateurs et circuits de multiplexage permettent ensuite de transférer les charges des différents points photosensibles vers un circuit de lecture et de traitement de données. Une matrice dont chaque point photosensible comprend une photodiode coopérant avec un élément interrupteur, comme indiqué plus haut, est décrite ainsi que son mode de fonctionnement dans une demande de brevet français n° 86.14. 058 (n° de publication 2.605.166).

Dans l'exemple de fonctionnement cité plus haut, les charges sont stockées, au fur et au mesure qu'elles sont générées, dans la zone de la photodiode par laquelle elles ont été produites. Suivant un autre mode de fonctionnement assez courant, aussi bien pour ce qui est de l'imagerie par rayons X que pour l'imagerie à partir d'un rayonnement visible, les charges sont transférées dès qu'elles sont produites, pour être stockées en dehors de la zone de la photodiode, par exemple au niveau d'un amplificateur assurant une fonction d'intégrateur. Cette configuration, que l'on peut rencontrer par exemple dans les tomodensitomètres à rayons X, pose particulièrement différents problèmes que l'invention a pour but de résoudre. Mais il est à noter cependant que les solutions proposées par l'invention, trouvent à s'appliquer aussi dans les modes de fonctionnement cités plus haut.

Les tomodensitomètres sont des appareils à rayons X qui utilisent généralement une seule source à rayons X et un ensemble détecteur pouvant comporter un grand nombre de points photosensibles. L'ensemble formé par la source et l'ensemble détecteur peut tourner et/ou se déplacer en translation par rapport au corps d'un patient, en vue de former l'image interne d'une tranche du patient. Un tel appareil est décrit par exemple dans le document US -A - 5 592 523.

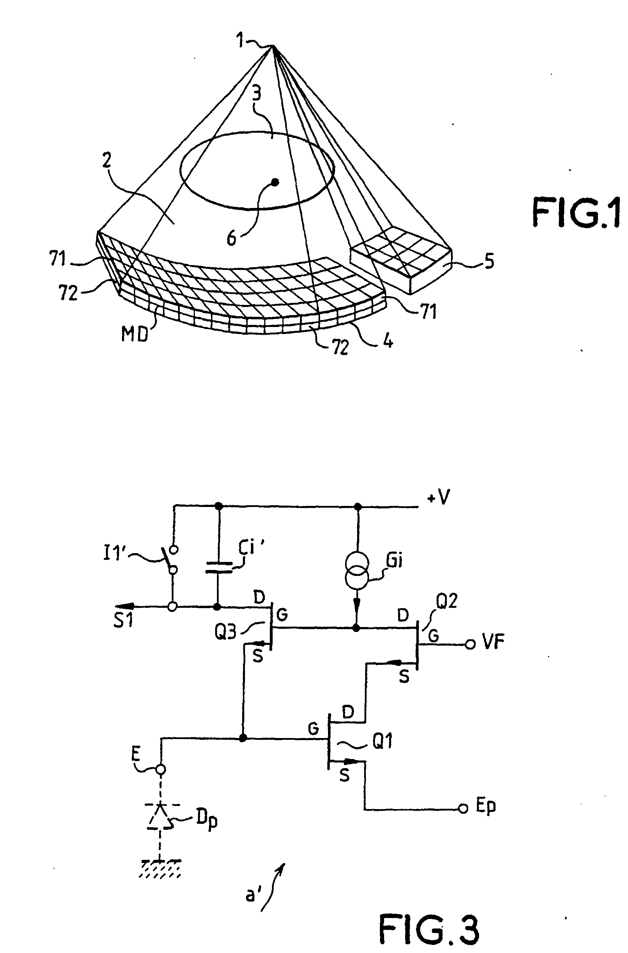

La figure 1 représente de façon schématique et simplifiée certains des éléments essentiels d'un tomodensitomètre. Le tomodensitomètre comporte une source 1 produisant un rayonnement X 2, et un ensemble détecteur 4. Le rayonnement X 2 irradie un corps 3 d'un patient interposé entre la source 1 et le dispositif détecteur 4. Le tomodensitomètre tourne autour d'un axe de rotation représenté par un point 6. Il peut comporter en outre un détecteur auxiliaire 5, situé hors du champ X masqué par le corps 3. Le dispositif détecteur 4 a une longueur qui s'étend suivant un arc de cercle. L'ensemble détecteur 4 comporte une multiplicité de points photosensibles de détection, disposés suivant la longueur et la largeur du dispositif détecteur 4. Les points photosensibles peuvent être regroupés en modules de détection MD.

Un tomodensitomètre peut comporter par exemple jusqu'à plusieurs dizaines de modules de détection, disposés côte à côte suivant la longueur du dispositif détecteur 4. Chaque module de détection MD comporte un matériau scintillateur 71 superposé à une matrice photosensible 72. Le matériau scintillateur a pour fonction de convertir le rayonnement X en un rayonnement lumineux auquel sont sensibles les matrices photosensibles ; le matériau scintillateur est donc situé du côté de la source 1.

Une matrice photosensible 72 peut comporter un réseau de photodiodes (non représentées à la figure 1), disposées suivant par exemple 32 lignes et 16 colonnes, soit un nombre de 512 photodiodes. Dans certaines applications comme celles relatives aux tomodensitomètres, chaque photodiode est reliée à un amplificateur d'acquisition de données qui a pour fonction notamment de recevoir et d'intégrer les charges au fur et au mesure qu'elles sont produites par la photodiode ; cette intégration des charges réalise d'une certaine manière le stockage des charges qui, dans l'autre mode de fonctionnement précédemment cité, s'effectue au niveau de la photodiode elle-même, alors que dans le cas présent ce stockage s'effectue à l'extérieur de la matrice photosensible.

En fait dans cette configuration, les amplificateurs qui reçoivent les signaux des photodiodes ne sont pas réalisées sur un même substrat que ces dernières, ces amplificateurs peuvent se trouver à proximité de la matrice photosensible.

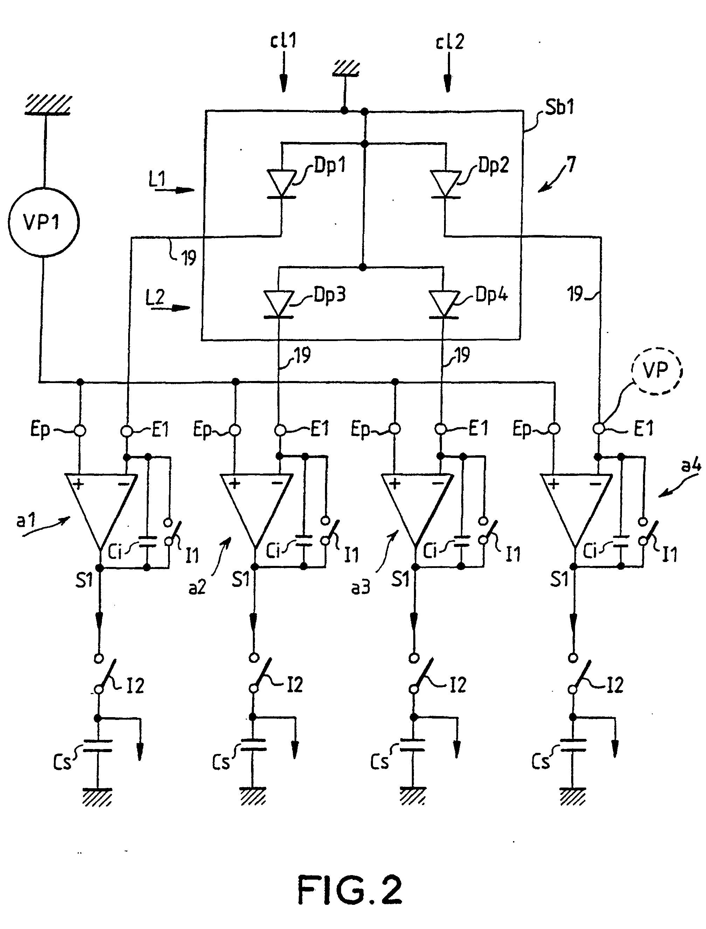

La figure 2 représente de façon schématique une matrice photosensible 7 semblable à une matrice 72 de la figure 1, et dont chaque point photosensible est formé par une photodiode. Pour simplifier la description seulement 4 photodiodes Dp1 à Dp4 sont représentées. Elles sont dans l'exemple disposées suivant 2 lignes L1, L2, et deux colonnes cl1, cl2. Les photodiodes Dp1 à Dp4 sont réalisées sur un substrat Sb1 et, par exemple de construction, elles sont toutes reliées électriquement par une même extrémité, leur anode dans l'exemple non limitatif représenté, audit substrat et à la masse.

L'autre extrémité de chacune des photodiodes, soit la cathode, est connectée à un conducteur individuel 19, par l'intermédiaire duquel chacune de ces cathodes est connectée à une première entrée E1 d'un amplificateur a1 à a4 propre à chaque photodiode.

Les amplificateurs a1 à a4 sont couramment constitués à l'aide d'amplificateurs opérationnels ; mais il est connu aussi de les réaliser par des composants discrets, avec un ou plusieurs transistors. Ces amplificateurs destinés à l'acquisition des données délivrées par les photodiodes (sous la forme de charges électriques), doivent répondre à des contraintes très sévères : faible bruit, forte dynamique et une grande stabilité pour la reproduction des mesures.

Dans l'exemple classique représenté, chaque première entrée E1 correspond en fait à l'entrée inverseuse "-" de l'amplificateur opérationnel a1 à a4.

Une capacité Ci dite d'intégration est reliée entre la première entrée et une sortie S1 de chaque amplificateur a1 à a4. Un premier élément interrupteur I1 (constitué par exemple par un transistor du type MOS) est monté en parallèle avec chaque capacité d'intégration Ci. Une seconde entrée Ep des amplificateurs a1 à a4 (correspondant à l'entrée non inverseuse "+" de l'amplificateur), appelée " entrée pilote ", reçoit une tension appelée tension pilote VP1, qui dans l'exemple est développée par rapport à la masse.

L'application de la tension pilote VP1 sur une entrée pilote Ep a pour effet d'établir sur la première électrode E1, une tension qui constitue la tension de polarisation VP des photodiodes Dp1 à Dp4. La valeur de la tension de polarisation VP est donc dépendante de la valeur de la tension pilote VP1 dont elle suit les variations, et dont elle est plus ou moins proche suivant notamment la nature et les qualités de l'amplificateur. Ceci montre que chacun des amplificateurs utilisés pour recevoir les charges délivrées par une photodiodes Dp1 à Dp4, doit comporter outre l'entrée E1 reliée à la photodiode, une autre entrée telle que l'entrée pilote Ep afin de recevoir la tension pilote VP dont découle le potentiel de polarisation VP présent sur la première entrée E1.

La sortie S1 de chacun des amplificateurs a1 à a4 est reliée à un deuxième élément interrupteur I2, dont l'autre côté est relié à une capacité Cs dite de stockage. L'autre armature de la capacité de stockage Cs est reliée dans l'exemple à la masse.

D'autres différents moyens sont également reliés aux capacités de stockage Cs, qui permettent notamment de transférer les charges vers des circuits de multiplexage et de traitement de données, mais ces moyens ne sont pas davantage décrits car ils sortent du champ de l'invention et sont en eux-mêmes connus. En fait le domaine directement intéressé par l'invention s'arrête à la sortie S1 des amplificateurs a1 à a4.

Pendant la phase d'exposition ou d'intégration, les premiers et deuxièmes interrupteurs I1, I2 sont ouverts, et les charges délivrées par les photodiodes Dp1 à Dp4 sont intégrées dans l'amplificateur a1 à a4 correspondant. Dans une phase suivante, les deuxièmes interrupteurs I2 sont fermés, et les quantités de charges intégrées par les amplificateurs pendant la phase d'intégration sont transférées sur les capacités de stockage Cs ; quand ce transfert est opéré les deuxièmes interrupteurs I2 sont mis à l'état ouvert, puis les premiers interrupteurs I1 sont fermés un bref instant pour décharger les capacités d'intégration Ci et permettre un nouveau cycle.

Pour un fonctionnement correct des photodiodes Dp1 à Dp4 dans les phases d'intégration, phases durant lesquelles elles délivrent des charges dont la quantité est fonction de l'intensité du signal lumineux auquel elles sont exposées, la tension de polarisation appliquée à ces photodiodes doit être comprise généralement entre 0 Volt (zéro) et une valeur de polarisation inverse de 20 mV. Cette polarisation doit être stable et appliquée d'une égale manière à toutes les photodiodes, sous peine d'affecter gravement la qualité des mesures et leur stabilité.

Dans le cas d'appareils qui utilisent un nombre peu élevé de photodiodes, jusqu'à quelques dizaines par exemple, il peut être admissible d'assurer le traitement des signaux délivrées par ces photodiodes en utilisant un canal individuel pour chacune, et en réalisant les éventuelles adaptations nécessaires au bon fonctionnement de chaque canal: par exemple en ajustant pour chaque amplificateur la valeur de la tension pilote qu'il reçoit, afin que chaque photodiode soit correctement polarisée.

Mais dans le cas de matrices pouvant comporter plusieurs centaines de photodiodes, cette méthode ne convient plus, et l'intégration des amplificateurs tels que a1 à a4 devient nécessaire, tant en ce qui concerne la facilité de fabrication, que l'encombrement, la dissipation thermique et le coût global. Une telle intégration pose malheureusement des problèmes quant à sa compatibilité avec la matrice photosensible : en effet, si l'on n'a plus recours à des canaux individuels de traitement, il devient plus difficile d'utiliser par exemple des amplificateurs opérationnels pour des questions notamment de différences de seuil de tension, comme il est davantage expliqué dans la suite de la description.

Il est à noter que par le terme " intégration ", nous entendons qu'il s'agit d'utiliser (et éventuellement de faire réaliser) un circuit intégré contenant de manière en elle-même classique, au moins tous les composants nécessaires à former, sur un même substrat, un nombre pouvant devenir relativement important d'amplificateurs tels que a1 à a4, un nombre tel que par exemple 64, 128, 256 ou 512 ou plus.

Il est à noter aussi que les amplificateurs a1 à a4 remplissent plusieurs fonctions dont celle d'amplificateur, plus celle d'intégrateur, et plus celle qui consiste à appliquer l'un des potentiels de la tension de polarisation VP à l'une des extrémités de la photodiode qui lui est raccordée. Aussi, ces amplificateurs sont appelés amplificateurs adaptateurs a1 à a4 dans la suite de la description.

Le fait que les photodiodes Dp1 à Dp4 soient réalisées sur un substrat et que les amplificateurs adaptateurs a1 à a4 soient sur un autre substrat, posé une difficulté en ce qui concerne la stabilité vis à vis des variations de température, car les dérives thermiques dans ce cas peuvent être très différentes et peuvent être néfastes. En effet la tension de seuil d'un transistor varie assez fortement avec la température, et tend alors à modifier la différence entre les valeurs de tensions présentes par exemple sur les premières entrées E1 et les entrées pilote Ep des amplificateurs adaptateurs a1 à a4.

Par ailleurs, il connu que des circuits intégrés provenant de lots de fabrication différents ont des tensions de fonctionnement différentes. Dans ce cas ils imposent des tensions de polarisation différentes aux photodiodes qui leur sont associées.

Il est connu d'utiliser des amplificateurs de type différentiel (dérive thermique inférieure à 20 µV/°C) quand on recherche une faible dérive thermique et une bonne stabilité en général. Sur ce plan des amplificateurs différentiels pourraient donc constituer les amplificateurs intégrés recherchés, mais dans le cas de la présente application, ce type d'amplificateur peut être déconseillé du fait notamment que son étage d'entrée demande deux transistors, et qu'il tend ainsi à majorer le bruit d'un facteur $\sqrt{2}$ (racine carrée de deux) relativement important. En outre un amplificateur de ce type utilise une surface double de silicium, ce qui tend à augmenter son encombrement et son coût.

Une autre solution (favorable au faible bruit) peut aussi consister à utiliser un amplificateur adaptateur n'utilisant qu'un transistor d'entrée.

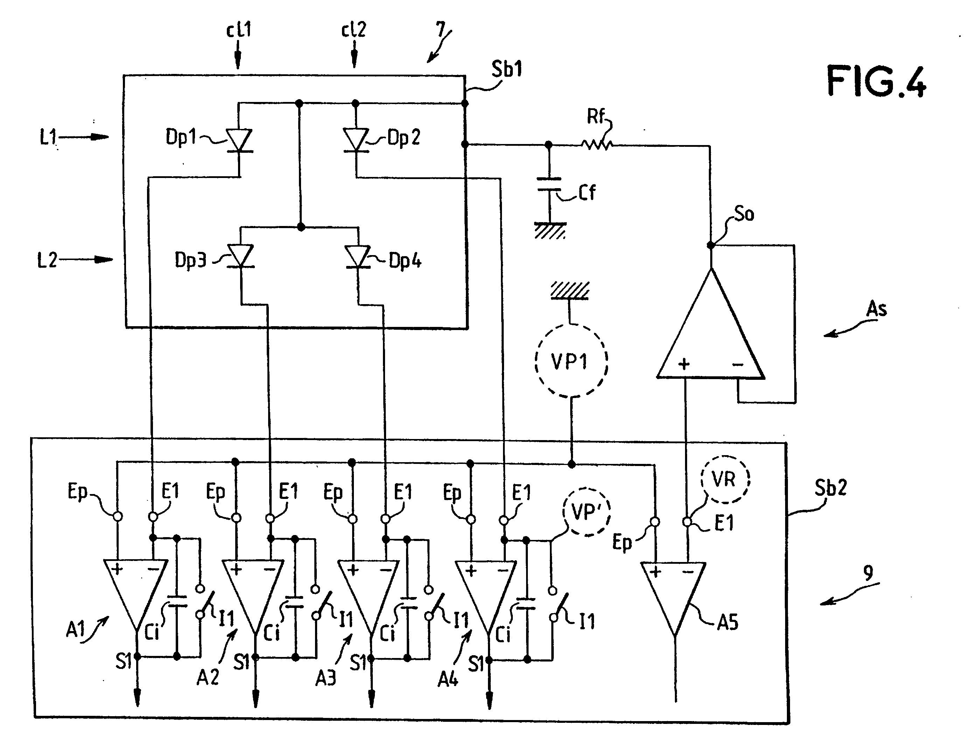

La figure 3 représente le schéma d'un amplificateur a' susceptible de remplir les fonctions assurées par les amplificateurs adaptateurs a1 à a4 de la figure 2.

L'amplificateur a' comporte 3 transistors de type MOS, Q1, Q2, Q3. Les transistors Q1 et Q2 forment un amplificateur à transconductance de type cascode, bien connu. Le transistor Q1 peut comporter une grande surface qui lui confère un faible bruit en tension sur sa grille G. Cette grille G de Q1 est reliée à la source S du troisième transistor Q3 et ce point forme une entrée E de l'amplificateur a'; cette entrée E par rapport aux amplificateurs a1 à a4 montrés figure 2, représente l'entrée inverseuse " - " et représente donc une première entrée telle que E1 à laquelle doit être raccordée une photodiode Dp (représentée en traits pointillés). Le Drain D de Q1 est relié à la source S du transistor Q2 dont la grille G est maintenue à une tension fixe VF, et dont le drain D est relié d'une part à une tension d'alimentation V+ par l'intermédiaire d'un générateur de courant Gi, et d'autre part à la grille G du troisième transistor Q3. Le drain D de Q3 reçoit une extrémité d'une capacité d'intégration Ci' dont l'autre extrémité est reliée à la tension d'alimentation V+.

La capacité Ci' intègre les courants et un interrupteur I1' disposé en parallèle avec la capacité Ci' permet de remettre la charge de cette dernière à zéro périodiquement. Le drain D de Q3 constitue la sortie de l'amplificateur a' et correspond à une sortie S1 des amplificateurs de la figure 2 (cette sortie serait donc à connecter vers un second interrupteur I2 montré à la figure 2). La source S du premier transistor Q1 constitue une seconde entrée Ep de l'amplificateur a'; cette entrée Ep correspond aux entrées non inverseuses "+ " des amplificateurs de la figure 2, et elle constitue donc une entrée pilote destinée à recevoir une tension pilote VP1, afin de déterminer sur l'entrée E la tension de polarisation VP2.

Bien qu'il présente des avantages notamment en ce qui concerne le bruit, par rapport à un amplificateur différentiel, le schéma d'amplificateur ci-dessus décrit pose lui aussi des problèmes, s'il est choisi pour être intégré comme envisagé plus haut. Cet amplificateur en effet est affecté d'une dérive thermique importante de l'ordre de 2mV/°C. D'autre part, en intégrant ce type d'amplificateur, des écarts de 0,1 volt à 0, 2 volt sont possibles d'un circuit intégré à un autre. En conséquence, si plusieurs tels circuits intégrés sont associés, chaque circuit aura sa propre tension de seuil. Or, on recherche une tension de polarisation des photodiodes comprises entre 0 et 20 millivolt.

Ces explications montrent que bien qu'elle soit souhaitable, l'intégration mentionnée plus haut est particulièrement difficile à mettre en place.

La présente invention a pour but de résoudre les problèmes cités ci-dessus, et notamment ceux liés à une même polarisation de toutes les photodiodes utilisées ainsi qu'à la conservation de cette polarisation dans le temps, et donc de permettre l'intégration des éléments utiles à l'acquisition des données de matrices photosensibles, et d'autoriser l'utilisation d'une large gamme de type d'amplificateur.

L'invention prévoit à cet effet de réaliser des amplificateurs adaptateurs réalisés sous la forme de circuits intégrés sur un même substrat, et d'utiliser l'un de ces amplificateurs adaptateurs intégrés pour obtenir un potentiel faisant fonction de référence, afin de définir la tension de polarisation des photodiodes par rapport à ce potentiel de référence.

Cette combinaison permet de résoudre tout ou partie des problèmes posés, car en pratique, les amplificateurs d'un même circuit intégré ont la même variation thermique à quelques fractions de mV près.

L'invention concerne donc un détecteur d'image, comportant une matrice de photodiodes, plusieurs amplificateurs adaptateurs intégrés sur un même substrat, destinés à recevoir des charges électriques produites par les photodiodes, ces charges étant produites durant une phase dite d'intégration durant laquelle elles sont chacune polarisées par une tension de polarisation, chaque amplificateur adaptateur ayant une première entrée et une deuxième entrée, la tension de polarisation étant appliquée à la cathode (ou respectivement l'anode) de chaque photodiode par l'intermédiaire de la première entrée d'un amplificateur adaptateur respectif dont la deuxième entrée est reliée à une entrée dite entrée pilote commune aux différents amplificateurs adaptateurs du même substrat et portée à une tension appelée tension pilote, caractérisé en ce qu'il est prévu un amplificateur adaptateur supplémentaire intégré sur le même substrat, ayant sa deuxième entrée recevant également la tension pilote, et en ce qu'il est prévu un circuit recevant la tension présente sur la première entrée de l'amplificateur adaptateur supplémentaire comme potentiel de référence et établissant entre les anodes (ou respectivement les cathodes) des photodiodes et les deuxièmes entrées des amplificateurs adaptateurs une différence de potentiel référencée par rapport à ce potentiel de référence.

L'invention sera mieux comprise à la lecture de la description qui suit, faite à titre d'exemple non limitatif et en référence aux figures annexées, parmi lesquelles :

- la figure 1 déjà décrite, représente de manière schématique un tomodensitomètre ;

- la figure 2 déjà décrite, représente de manière schématique une matrice de photodiodes et des amplificateurs adaptateurs servant à l'acquisition des données délivrées par les photodiodes, dans une configuration de l'art antérieur ;

- la figure 3 déjà décrite, représente de manière schématique un mode de réalisation particulier d'un amplificateur adaptateur représenté à la figure 2 ;

- la figure 4, montre de façon schématique une matrice de photodiodes et des amplificateurs adaptateurs servant à l'acquisition des données délivrées par les photodiodes, dans un premier mode de réalisation de l'invention ;

- la figure 5, montre de façon schématique une matrice de photodiodes et des amplificateurs adaptateurs servant à l'acquisition des données délivrées par les photodiodes, dans un second mode de réalisation de l'invention .

La figure 4 représente une matrice photosensible 7 qui dans l'exemple est identique en structure à celle de la figure 2. Elle comporte des photodiodes Dp1 à Dp4 formées sur un substrat Sb1. Dans l'exemple non limitatif décrit, toutes les anodes sont reliées entre elles, par le substrat par exemple. Comme dans l'exemple de la figure 2, la cathode de chacune des photodiodes Dp1 à Dp4 est reliée, à l'extérieur de la matrice 7, à une première entrée E1 d'un amplificateur adaptateur A1 à A4 à laquelle elle délivre les charges produites par la photodiode ; ces amplificateurs adaptateurs A1 à A4 sont représentés sur la figure 4 comme des amplificateurs opérationnels et ils sont par exemple semblables aux amplificateurs adaptateurs a1 à a4 déjà décrits en référence à la figure 2, et remplissent les mêmes fonctions.

Suivant une caractéristique de l'invention, les amplificateurs adaptateurs A1 à A4 utiles à l'acquisition des données des photodiodes Dp1 à Dp4 sont constitués en au moins un circuit intégré 9, et en conséquence dans l'exemple de la figure 4, ils sont formés sur un même substrat Sb2.

La tension appelée tension pilote VP1, déjà citée, référencée par rapport à la masse par exemple, est appliquée aux secondes entrées ou entrées pilote Ep des amplificateurs adaptateurs A1 à A4. Il en résulte, comme déjà expliqué précédemment, que l'un des potentiels de la tension de polarisation VP est présent sur les premières entrée E1, et se trouve donc connecté aux cathodes des photodiodes.

Pour appliquer l'autre potentiel de la tension de polarisation VP aux anodes des photodiodes, dans une première forme de réalisation de l'invention et suivant une autre de ses caractéristiques, on utilise un amplificateur supplémentaire c'est à dire dans l'exemple un cinquième amplificateur adaptateur A5. Cet amplificateur A5 est d'une structure identique aux quatre amplificateurs adaptateurs A1 à A4, et il est réalisé sur le même substrat Sb2 que ces derniers, mais aucune photodiode ne lui est relié. L'entrée pilote Ep de cet amplificateur supplémentaire A5 est reliée elle aussi à la tension pilote VP1, et en conséquence sa première entrée E1 est portée au potentiel de la tension de polarisation VP d'une même manière que les autres premières entrées E1.

Le potentiel présent sur la première entrée E1 de l'amplificateur supplémentaire A5, est considéré comme un potentiel de référence VR.

Suivant une nouvelle caractéristique de l'invention, le potentiel de référence VR est appliqué à un amplificateur opérationnel d'un type courant (par exemple connu sous la référence LM 308), fonctionnant en amplificateur suiveur As. L'amplificateur suiveur As reproduit à basse impédance le potentiel de référence VR qui lui est appliqué à l'entrée. La sortie So de l'amplificateur suiveur As est reliée au substrat Sb1 de la matrice 7 et donc aux anodes des photodiodes Dp1 à Dp4, par l'intermédiaire d'un filtre passe bas ; ce dernier est formé de manière classique d'une part, par une résistance Rf insérée en série entre la sortie So et le substrat Sb1, et d'autre part par une capacité Cf connectée entre la masse et le substrat Sb1.

Dans ces conditions, on définit la tension de polarisation VP par rapport au potentiel de référence VR car on applique aux anodes des photodiodes Dp1 à Dp4, un potentiel qui reste toujours très proche de celui du potentiel de référence VR ; le potentiel de référence VR étant lui-même très proche du potentiel appliqué aux cathodes des photodiodes, il en résulte que la tension de polarisation VP est nulle ou très faible, et ceci à toutes températures.

Dans cette version de l'invention, toutes les photodiodes Dp1 à Dp4 de la matrice 7 sont reliées à un même circuit intégré 9, et ce dernier doit donc dans ce cas posséder au moins un amplificateur adaptateur de plus que le nombre des photodiodes, pour délivrer le potentiel de référence VR. Bien entendu, le nombre des photodiodes que comporte la matrice 7 peut être différent de celui représenté, plus faible ou plus important jusqu'à par exemple plusieurs centaines ou plusieurs milliers, voire davantage. Il convient dans ce cas d'augmenter le nombre d'amplificateurs adaptateurs contenu par le circuit intégré, ce qui ne modifie pas l'organisation générale montrée par l'exemple de la figure 4.

Il est préférable en effet dans cette version de l'invention, d'associer les photodiodes d'une même matrice à des amplificateurs adaptateurs contenus dans un même circuit intégré, afin d'éviter des différences entre les tensions de polarisation délivrées par différents circuits intégrés.

Il est à noter que les amplificateurs adaptateurs A1 à A5 peuvent avantageusement être constitués par des amplificateurs du type de l'amplificateur a' représenté à la figure 3 ; ce type d'amplificateur présente en effet des caractéristiques de bruit favorables, dispose d'une entrée pilote, et permet d'assurer toutes les fonctions remplies par les amplificateurs adaptateurs A1 à A5.

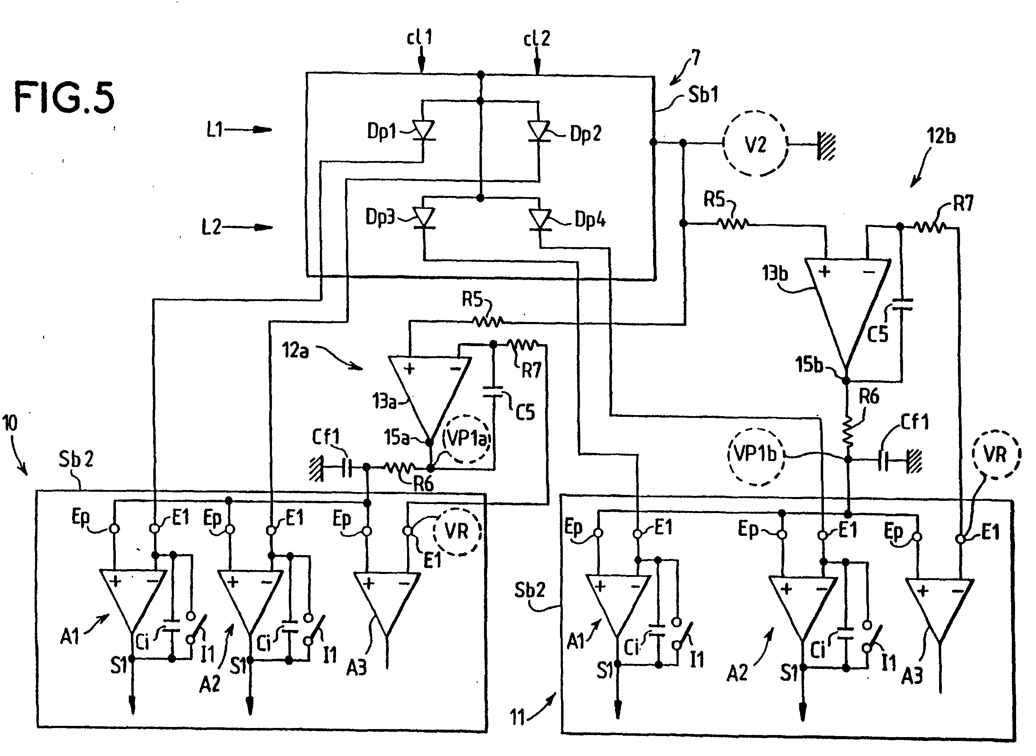

La figure 5 représente un deuxième mode de réalisation de l'invention, avantageux notamment en ce qu'il permet l'utilisation de plusieurs circuits intégrés pour lire une même matrice de photodiodes.

La matrice photosensible 7 montrée à la figure 5 est la même que celle montrée à la figure 4, c'est à dire que pour simplifier la description elle est représentée avec seulement quatre photodiodes Dp1 à Dp4. Toutes les anodes des photodiodes Dp1 à Dp4 sont reliées entre elles par le substrat Sb1 par exemple.

Dans cette version de l'invention, les photodiodes sont partagées en groupes, c'est à dire que certaines des photodiodes sont associées à des amplificateurs adaptateurs appartenant à un premier circuit intégré 10, et les autres photodiodes sont associées à des amplificateurs adaptateurs appartenant à un deuxième circuit intégré 11. Dans l'exemple représenté : les deux photodiodes Dp1, Dp2 d'une même ligne L1 forment un groupe et sont reliées par leur cathode respectivement à la première entrée E1 d'un premier et d'un deuxième amplificateurs adaptateurs A1, A2, contenus dans le premier circuit intégré 10 ; les deux photodiodes Dp3, Dp4 de l'autre ligne L2 forment un second groupe et sont reliées respectivement à la première entrée E1 d'un premier et d'un deuxième amplificateurs adaptateurs A1, A2, contenus dans le deuxième circuit intégré 11.

Les deux circuits intégrés 10, 11 peuvent être constitués avec des amplificateurs adaptateurs d'un même type, bien que cette condition ne soit pas obligatoire pour le bon fonctionnement. Dans l'exemple non limitatif représenté, chaque circuit intégré 10, 11 comporte trois amplificateurs adaptateurs A1, A2, A3, dont le troisième A3 est l'amplificateur adaptateur supplémentaire destiné à fournir le potentiel de référence VR présent sur sa première entrée E1.

Une tension fixe V2 est appliquée au substrat Sb1 de la matrice 7 et donc aux anodes de toutes les photodiodes Dp1 à Dp4, en vue de constituer l'un des potentiels de la tension de polarisation VP. Suivant l'invention, l'autre potentiel de la tension de polarisation VP ayant la valeur voulue par rapport à la tension fixe V2, est délivré aux cathodes en appliquant aux entrées pilotes Ep une tension pilote VP1a, VP1b élaborée à l'aide d'un d'asservissement utilisant un circuit comparateur 12a, 12b ; un circuit comparateur 12a est affecté au circuit intégré 10, et un circuit comparateur 12b est affecté au circuit intégré 11. La tension de polarisation VP correspond donc à la différence de potentiel entre la tension présente sur les premières entrées E1, et celle de la tension fixe V2.

Les circuits comparateurs 12a, 12b comportent chacun un amplificateur opérationnel respectivement 13a, 13b, par exemple un amplificateur connu dans le commerce sous la référence LM 308. Chaque amplificateur opérationnel 13a, 13b est monté d'une manière en elle même classique, pour constituer notamment un comparateur de tension délivrant un signal quand il détecte une différence entre une première et une seconde tension appliquées respectivement à sa première et à sa seconde entrée "-", "+" ; il délivre dans ce cas sur sa sortie 15a, 15b un signal dont le signe est fonction du sens de la différence sur ses entrées.

Dans l'exemple non limitatif décrit, la tension fixe V2 appliquée au substrat Sb1 de la matrice 7, est également appliquée à l'entrée non inverseuse "+" des deux amplificateur 13a, 13b, par l'intermédiaire d'une résistance R5 (100 KΩ par exemple) pour chacun. Les entrées pilotes Ep des circuits intégrés sont reliées à la sortie 15a, 15b de l'amplificateur 13a, 13b qui lui correspond, c'est à dire la sortie 15a pour le premier circuit intégré 10 et 15b pour le second circuit intégré 11 ; cette liaison s'effectue par une résistance R6 (par exemple 1000 Ω) qui coopère avec un condensateur Cf1 ( par exemple 1000μF) pour former un filtre passe bas. Il en est de même pour les premières entrées E1 délivrant des tensions de référence VR, dont celle qui appartient au premier circuit intégré 10 est reliée à l'entrée inverseuse "-" de l'amplificateur 13a, et celle du second circuit intégré 11 est reliée à l'entrée inverseuse "-" de l'amplificateur 13b, chacune par une résistance R7 (égale à R5). Enfin pour chaque amplificateur 13a,13b, l'entrée inverseuse "-"est reliée à la sortie 15a, 15b par un condensateur C5 d'une valeur par exemple de 1μF. Les deux amplificateurs 13a,13b sont alimentés de façon habituelle par des tensions non représentées.

En fonctionnement, chacun des amplificateurs opérationnels 13a,13b délivre une tension pilote VP1a, VP1b, appliquée aux entrées pilotes Ep du respectivement premier et second circuits intégrés 10,11. Chacune de ces tensions pilotes possède alors une valeur telle que la tension de référence qu'elle engendre, et qui est appliquée sur l'entrée inverseuse "-"de l'amplificateur opérationnel correspondant, ait une même valeur que la tension qui est appliquée à l'entrée non inverseuse "+" de ce même amplificateur opérationnel.

Les amplificateurs opérationnels 13a,13b étant montés d'une même façon, ils sont ajustés pour déterminer les valeurs des tensions pilotes de telle manière que la différence de potentiel établie aux bornes des photodiodes soit celle recherchée, et soit la même pour toutes les photodiodes ; ceci peut conduire à des valeurs de tensions pilotes VP1a, VP1b différentes pour compenser d'éventuelles différences de seuils en tension présentés par les différents circuits intégrés 10,11. Dans l'exemple non limitatif décrit, les conditions de fonctionnement des amplificateurs opérationnels 13a, 13b ont été ajustées, de manière en elle-même classique, pour que la différence de potentiel établie aux bornes des photodiodes soit proche de 0 volt.

Cette version de l'invention permet d'utiliser simultanément plusieurs circuits intégrés, pour lire et polariser à une même valeur de tension de polarisation, les photodiodes d'une même matrice photosensible.

Cependant cette version de l'invention présente aussi un grand intérêt même quand les photodiodes sont associées à un unique circuit intégré, car un circuit comparateur 12a,12b présente l'avantage d'être facilement ajusté pour obtenir une quelconque valeur de polarisation des photodiodes.

Dans l'exemple non limitatif de la figure 5, un même nombre de photodiodes Dp1 à Dp4 coopère avec chaque circuit intégré 10,11, mais il est possible de faire des répartitions différentes, qui dépendent notamment des fabrications réalisées en circuits intégrés, et des disponibilités en circuits intégrés disposant d'un nombre d'amplificateurs adaptateurs égal ou supérieur au nombre des photodiodes d'une même matrice à utiliser ; sans oublier bien entendu que dans chaque circuit intégré, un amplificateur adaptateur doit être réservé pour fournir la tension de référence VR.

A titre d'exemple, dans le cas d'une matrice photosensible comportant 600 photodiodes, il serait possible d'utiliser un premier circuit intégré contenant 512 amplificateurs adaptateurs, et un second en contenant 128.

Bien entendu, il est clair également que le montage décrit à la figure 5 autorise l'utilisation d'un nombre important de circuits intégrés contenant chacun un nombre important d'amplificateurs adaptateurs tels que A1, A2, ..,,A5.

Il est à observer que le fonctionnement d'une matrice photosensible coopérant avec des amplificateurs adaptateurs réalisés sous la forme de circuits intégrés, tel que ci-dessus décrit, s'applique aussi bien à un détecteur d'image pour détecter des images contenues dans un rayonnement visible que dans un rayonnement X. En effet, il suffit pour l'un ou l'autre des cas, d'ôter ou d'interposer devant la matrice photosensible, le matériau scintillateur 71 cité en référence à la figure 2.

Enfin, la description a été faite en référence principalement à une matrice de photodiodes, mais l'invention s'applique à tout ensemble contenant des photodiodes, et par le terme " matrice "nous entendons aussi les barrettes de photodiodes.

**Revendications**

1. Détecteur d'image, comportant une matrice (7) de photodiodes (Dp1 à Dp4), plusieurs amplificateurs adaptateurs (A1 à A4) intégrés sur un même substrat, destinés à recevoir des charges électriques produites par les photodiodes, ces charges étant produites durant une phase dite d'intégration durant laquelle elles sont chacune polarisées par une tension de polarisation (VP), chaque amplificateur adaptateur ayant une première entrée (E1) et une deuxième entrée (Ep), la tension de polarisation étant appliquée à la cathode (ou respectivement l'anode) de chaque photodiode (Dp1 à Dp4) par l'intermédiaire de la première entrée d'un amplificateur adaptateur (A1 à A4) respectif dont la deuxième entrée est reliée à une entrée dite entrée pilote commune aux différents amplificateurs adaptateurs du même substrat et portée à une tension appelée tension pilote (VP1, VP1a, VP1b), **caractérisé en ce qu'**il est prévu un amplificateur adaptateur supplémentaire (A5, A3) intégré sur le même substrat, ayant sa deuxième entrée recevant également la tension pilote, et **en ce qu'**il est prévu un circuit (As, 13a, 13b) recevant la tension présente sur la première entrée de l'amplificateur adaptateur supplémentaire comme potentiel de référence (VR) et établissant entre les anodes (ou respectivement les cathodes) des photodiodes et les deuxièmes entrées des amplificateurs adaptateurs une différence de potentiel référencée par rapport à ce potentiel de référence.

2.  Détecteur d'image suivant la revendication précédente, **caractérisé en ce qu'**il comporte au moins un amplificateur (As) fonctionnant en amplificateur suiveur, dont l'entrée (" + ") reçoit le potentiel de référence (VR) et dont la sortie (So) est reliée aux anodes (ou respectivement cathodes) des photodiodes (Dp1 à Dp4).

3.  Détecteur d'image suivant la revendication 2, **caractérisé en ce que** la tension de polarisation (VP) des photodiodes (Dp1 à Dp4) est égale ou voisine de 0 volt.

4.  Détecteur d'image suivant l'une quelconque des revendications précédentes, **caractérisé en ce qu'**il comporte au moins un circuit intégré (10,11) associé à un circuit comparateur (12a, 12b) dont une première entrée " - " reçoit la tension de référence (VR) délivrée par le circuit intégré (10,11), et dont une seconde entrée " + " reçoit une tension fixe (V2) appliquée également aux anodes (ou respectivement cathodes) des photodiodes (Dp1 à Dp4), la sortie (15a, 15b) du circuit comparateur (12a, 12b) étant reliée à l'entrée pilote (Ep) du circuit intégré (10,11) auquel elle délivre une tension pilote (VP1a, VP1b).

5.  Détecteur d'image suivant la revendication 4, **caractérisé en ce que** au moins deux circuits intégrés comportant chacun un groupe d'amplificateurs adaptateurs (10,11) sont associés chacun à un circuit comparateur (12a, 12b) et **en ce que** les photodiodes (Dp1 à Dp4) d'au moins une matrice photosensible (7) sont partagées en au moins deux groupes (Dp1, Dp2 et Dp3, Dp4), les photodiodes de l'un des groupes étant reliées aux amplificateurs adaptateurs (A1 à A3) de l'un des circuits intégrés et les photodiodes de l'autre groupe étant reliées aux amplificateurs adaptateurs (A1 à A3) de l'autre des circuits intégrés, et **en ce que** les sorties des comparateurs sont connectées respectivement aux entrées pilotes des circuits intégrés respectifs.

6.  Détecteur d'image suivant l'une quelconque des revendications précédentes, **caractérisé en ce que** les amplificateurs adaptateurs (A1 à A5) utilisent des amplificateurs (a') du type comportant un unique transistor d'entrée.

7.  Détecteur d'image suivant l'une quelconque des revendications précédentes, **caractérisé en ce que** les amplificateurs adaptateurs (A1 à A5) coopèrent avec une capacité(Ci) dite d'intégration pour intégrer les charges délivrées par les photodiodes (Dp1 à Dp4).

8.  Détecteur d'image suivant l'une quelconque des revendications précédentes, **caractérisé en ce que** étant prévu pour détecter des images contenues dans un rayonnement X, il comporte en outre au moins un matériau scintillateur (71).

**Patentansprüche**

1.  Bilddetektor mit einer Matrix (7) von Photodioden (Dp1 bis Dp4) und mit mehreren auf einem gemeinsamen Substrat integrierten Adapterverstärkern (A1 bis A4), die von den Photodioden erzeugte elektrische Ladungen empfangen sollen, welche während einer Integrationsphase, in der alle Photodioden durch eine Vorspannung (VP) in Sperrichtung vorgespannt sind, gebildet wurden, wobei jeder Adapterverstärker einen ersten Eingang (E1) und einen zweiten Eingang (Ep) enthält und wobei die Vorspannung an die Kathode (oder beziehungsweise Anode) jeder Photodiode (Dp1 bis Dp4) über einen ersten Eingang eines zugeordneten Adapterverstärkers (A1 bis A4) angelegt wird, dessen zweiter Eingang an einen gemeinsamen Steuerausgang für die verschiedenen Adapterverstärker desselben Substrats angelegt ist und eine Steuerspannung (VP1, VP1a, VP1b) überträgt, **dadurch gekennzeichnet, daß** ein zusätzlicher Adapterverstärker (A5, A3) vorgesehen ist, der auf demselben Substrat integriert ist und dessen zweiter Eingang ebenfalls die Steuerspannung empfängt, und daß eine Schaltung (As, 13a, 13b) vorgesehen ist, die die am ersten Eingang des zusätzlichen Adapterverstärkers vorhandene Spannung als Bezugspotential (VR) empfängt und zwischen den Anoden (oder beziehungsweise Kathoden) der Photodioden und den zweiten Eingängen der Adapterverstärker einen Potentialunterschied bildet, der auf dieses Bezugspotential bezogen ist.

2.  Bilddetektor nach dem vorstehenden Anspruch, **dadurch gekennzeichnet, daß** er mindestens einen Verstärker (As) aufweist, der als Folgeverstärker wirkt und dessen positiver Eingang ("+") das Referenzpotential (VR) empfängt, während der Ausgang (So) an die Anoden (oder beziehungsweise Kathoden) der Photodioden (Dp1 bis Dp4) angeschlossen ist.

3. Bilddetektor nach Anspruch 2, **dadurch gekennzeichnet, daß** die Vorspannung (VP) der Photodioden (Dp1 bis Dp4) gleich oder nahe null Volt liegt.

4. Bilddetektor nach einem beliebigen der vorstehenden Ansprüche, **dadurch gekennzeichnet, daß** er mindestens eine integrierte Schaltung (10, 11) enthält, die einem ersten Komparator (12a, 12b) zugeordnet ist, der an einem ersten Eingang "-" die von der integrierten Schaltung (10, 11) gelieferte Referenzspannung (VR) und an einem zweiten Eingang "+" eine auch an die Anoden (oder beziehungsweise Kathoden) der Photodioden (Dp1 bis Dp4) gelieferte Festspannung (V2) empfängt, während der Ausgang (15a, 15b) der Komparatorschaltung (12a, 12b) an den Steuereingang (Ep) der integrierten Schaltung (10, 11) angeschlossen ist und dieser eine Steuerspannung (VP1a, VP1b) liefert.

5. Bilddetektor nach Anspruch 4, **dadurch gekennzeichnet, daß** mindestens zwei integrierte Schaltungen mit je einer Gruppe von Adapterverstärkern (10, 11) je einer Komparatorschaltung (12a, 12b) zugeordnet sind und daß die Photodioden (Dp1 bis Dp4) mindestens einer lichtempfindlichen Matrix (7) in mindestens zwei Gruppen (Dp1, Dp2; Dp3, Dp4) aufgeteilt sind, wobei die Photodioden der einen Gruppe an die Adapterverstärker (A1 bis A3) einer der integrierten Schaltungen angeschlossen sind und die Photodioden der anderen Gruppe an die Adapterverstärker (A1 bis A3) der anderen integrierten Schaltung angeschlossen sind, und daß die Ausgänge der Komparatoren an die Steuereingängen der jeweiligen integrierten Schaltung angeschlossen sind.

6. Bilddetektor nach einem beliebigen der vorstehenden Ansprüche, **dadurch gekennzeichnet, daß** die Adapterverstärker (A1 bis A5) Verstärker (a') verwenden, die nur einen Eingangstransistor enthalten.

7. Bilddetektor nach einem beliebigen der vorstehenden Ansprüche, **dadurch gekennzeichnet, daß** die Adapterverstärker (A1 bis A5) mit einem sogenannten Integrationskondensator (Ci) zusammenwirken, um die von den Photodioden (Dp1 bis Dp4) gelieferten Ladungen zu integrieren.

8. Bilddetektor nach einem beliebigen der vorstehenden Ansprüche, **dadurch gekennzeichnet, daß** in Anwendung auf die Erfassung von in einer Röntgenstrahlung enthaltenen Bildern mindestens ein Szintillatormaterial (71) vorgesehen ist.

## Claims

1. Image detector, comprising an array (7) of photodiodes (Dp1 to Dp4), several adapter amplifiers (A1 to A4) integrated on one and the same substrate, intended for receiving electric charges produced by the photodiodes, these charges being produced during a so-called integration phase during which they are each biased by a bias voltage (VP), each adapter amplifier having a first input (E1) and a second input (Ep), the bias voltage being applied to the cathode (or respectively the anode) of each photodiode (Dp1 to Dp4) by way of the first input of a respective adapter amplifier (A1 to A4) whose second input is linked to an input referred to as the drive input which is common to the various adapter amplifiers of the same substrate and is brought to a voltage called the drive voltage (VP1, VP1a, VP1b), **characterized in that** there is provided an additional adapter amplifier (A5, A3) integrated on the same substrate, having its second input also receiving the drive voltage, and **in that** there is provided a circuit (As, 13a, 13b) receiving the voltage present on the first input of the additional adapter amplifier as reference potential (VR) and establishing between the anodes (or respectively the cathodes) of the photodiodes and the second inputs of the adapter amplifiers a potential difference referenced with respect to this reference potential.

2. Image detector according to the preceding Claim, **characterized in that** it comprises at least one amplifier (As) operating as a follower amplifier, whose input ("+") receives the reference potential (VR) and whose output (So) is linked to the anodes (or respectively cathodes) of the photodiodes (Dp1 to Dp4).

3. Image detector according to Claim 2, **characterized in that** the bias voltage (VP) of the photodiodes (Dp1 to Dp4) is equal to or around 0 volts.

4. Image detector according to any one of the preceding claims, **characterized in that** it comprises at least one integrated circuit (10, 11) associated with a comparator circuit (12a, 12b), a first "-" input of which receives the reference voltage (VR) delivered by the integrated circuit (10, 11), and a second "+" input of which receives a fixed voltage (V2) applied also to the anodes (or respectively cathodes) of the photodiodes (Dp1 to Dp4), the output (15a, 15b) of the comparator circuit (12a, 12b) being linked to the drive input (Ep) of the integrated circuit (10, 11) to which it delivers a drive voltage (VP1a, VP1b), the output of the comparator circuit (12a, 12b) being linked to the drive input.

5. Image detector according to Claim 4, **characterized in that** at least two integrated circuits each comprising a group of adapter amplifiers (10, 11) are each associated with a comparator circuit (12a, 12b) and **in that** the photodiodes (Dp1 to Dp4) of at least one photosensitive array (7) are split into at least two groups (Dp1, Dp2 and Dp3, Dp4), the photodiodes of one of the groups being linked to the adapter amplifiers (A1 to A3) of one of the integrated circuits and the photodiodes of the other group being linked to the adapter amplifiers (A1 to A3) of the other of the integrated circuits, and **in that** the outputs of the comparators are connected respectively to the drive inputs of the respective integrated circuits.

6. Image detector according to any one of the preceding claims, **characterized in that** the adapter amplifiers (A1 to A5) use amplifiers (a') of the type comprising a single input transistor.

7. Image detector according to any one of the preceding claims, **characterized in that** the adapter amplifiers (A1 to A5) cooperate with a so-called integration capacitance (Ci) so as to integrate the charges delivered by the photodiodes (Dp1 to Dp4).

8. Image detector according to any one of the preceding claims, **characterized in that** being designed to detect images contained in X-ray radiation, it furthermore comprises at least one scintillator material (71).

FIG.1

FIG.3

FIG.2

12

FIG.4

FIG.5